# EUROPEAN PATENT SPECIFICATION

(11) **EP 0 904 496 B1**
(45) Date of publication and mention of the grant of the patent: **03.04.2002**
(21) Application number: 96922464.1
(22) Date of filing: 14.06.1996
(51) Int. Cl.: F16B 37/04

(54) **FLOATING SPRING NUT ASSEMBLY**
KÄFIGMUTTER MIT FEDERWIRKUNG
ENSEMBLE ECROU A RESSORT FLOTTANT

(43) Date of publication of application: 31.03.1999
(73) Proprietor: Mitts, Richard K., Fullerton, CA 92635 (US)
(72) Inventor: Mitts, Richard K., Fullerton, CA 92635 (US)
(74) Representative: Brereton, Paul Arthur
(86) International application number: US9610292
(87) International publication number: WO9747892

(56) References cited:
- EP-A- 0 407 282
- DE-A- 2 523 185
- DE-B- 1 110 956
- FR-A- 2 719 347
- SE-C- 216 946
- US-A- 5 193 643

## Description

### BACKGROUND

### 1. Field of the Invention

The present invention relates generally to a U-shaped fastener for being received onto a panel including an adjustably positionable nut member.

### 2. Description of Related Art

It is known to provide a U-shaped fastener that can be readily slipped over the edge of a panel and via which a threaded member may secure an object to the panel. Such U-shaped fasteners are especially advantageous when applied to panels made of a composition of wood, plastic or other non-metallic material that do not possess the necessary physical characteristics to reliably retain a weighty object by the direct use of bolts or screws on the panel, for example.

Although known U-shaped fasteners are advantageous in providing a suitable seating and retaining means on a panel of non-metallic composition, they are of customized dimensions for each use depending upon the thickness of the material and the location of the opening from the material, for example, through which the bolt or screw is received. It is a desideratum, therefore, to provide a fastener for mounting equipment onto a panel having the capability of use over a range of site mounting dimension variances.

DE-1110956B describes known fasteners for mounting on a panel for receiving a threaded member.

In accordance with the present invention there is provided a fastener assembly as defined in claim 1.

### SUMMARY OF THE INVENTION

The described fastener provides for a substantial variation in location of an opening in a panel that can be accommodated by the same fastener merely by shifting the movable nut plate element relative to the U-shaped cage.

In an alternative embodiment of the invention, the nut plate includes a sleeve having a plurality of threads internally roll-formed.

### BRIEF DESCRIPTION OF THE DRAWING

FIG. 1 is a perspective view of a first embodiment of fastener assembly of this invention;
FIG. 2 is a top plan view of the fastener of FIG.1;
FIG. 3 is a side elevational view taken along the line 3-3 of FIG. 2;
FIG. 4 is a bottom plan view;
FIG. 5 is a perspective view of the cage and nut plate parts shown separated;
FIG. 6 is a perspective view of an alternative embodiment of the present invention;
FIG. 7 is a side elevational view taken along the line 7-7 of FIG. 6; and
FIG. 8 is a top plan view of the FIG. 8 version with cage and nut plate parts shown unassembled.

### DESCRIPTION OF PREFERRED EMBODIMENTS

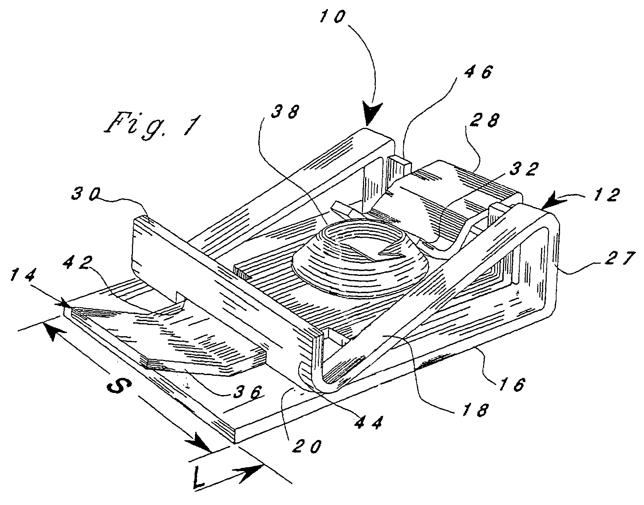

Turning now to the drawings and particularly FIG. 1, a first embodiment of the fastener assembly of the present invention is enumerated generally as 10. The fastener assembly includes a cage member 12 and movable nut plate 14 which coact, in a way that will be more particularly described, to provide adjustable mounting flexibility.

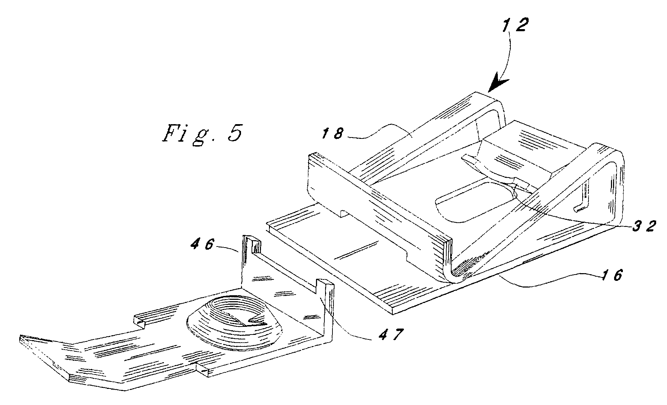

With reference simultaneously to FIG. 5, the cage 12 is constructed of an elongated strip of flat spring-like metal which has been formed into a generally U-shaped construction, one arm 16 of which has the other arm 18 bent back across it providing a slightly spaced apart portion at 20 of the two arms providing an entrance space for mounting onto a panel, as will be described.

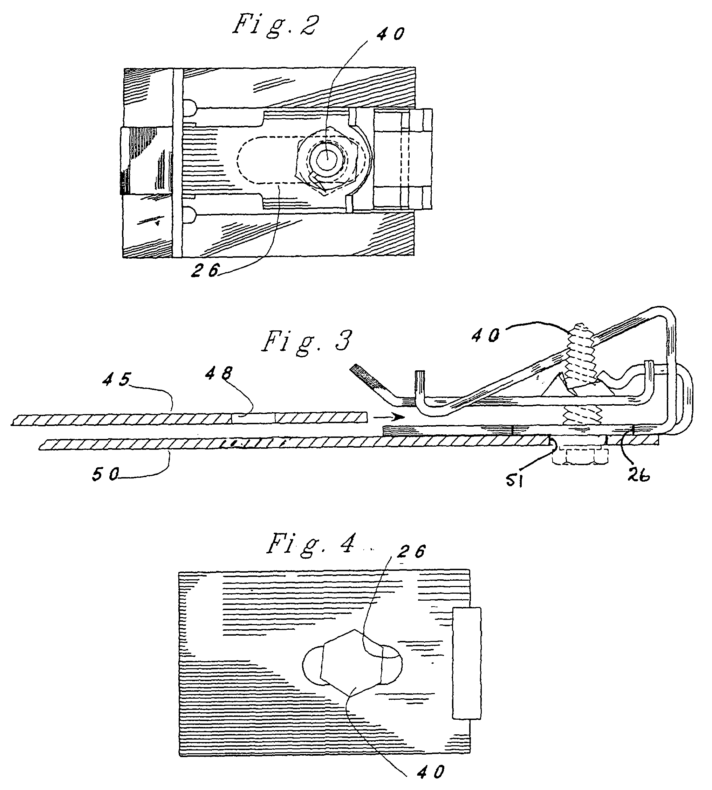

More particularly, the cage member arm 16 is generally rectangular with a long side L, a short side S and a slotlike opening 26 (FIG. 2) located on and extending along the longitudinal axis of the arm. The side opposite the short side is formed generally into an upstanding end wall 27 which is integral with the cage member other arm 18.

A central tab portion 28 is formed by having three sides cut out from the arm 18 and end wall 27 with a further side integrally interconnected to the arm 16 between the end wall parts 27. The tab portion extends slightly beyond the end wall 27 and has an end portion 32 that extends upwardly away from the arm 16 and back toward the forward end wall 30 in a general hook configuration spaced from each end wall parts 27. The nut plate 14 is a separate item from the cage member 12 constructed of a generally rectangular flat metal sheet having a rectangular tongue portion 36 of reduced width as compared with the remainder of the sheet. Adjacent an end portion of the nut plate in the wider sheet region there is formed a single-thread opening 38 to receive a sheet metal screw or bolt 40, for example, in use of the fastener (FIG. 2).

In assembly, it is assumed at first that all of the parts are constructed as previously described. The nut plate is then slid between the cage arms and the plate tongue 36 is moved forwardly within the cage and passed through a suitably dimensioned opening 42 in the turned-up forward edge portion 44. The nut plate is held within the cage 12 in a manner allowing the nut plate freedom to move within the cage while confined in a direction generally parallel to the slotlike opening 26 longitudinal axis. The outer end portion 44 of the tongue is formed upwardly away from the cage first arm 16 to avoid obstructing with a panel 45 edge when the described fastener assembly is mounted onto the panel as described later. The opposite end portion includes first and second upwardly extending members 46 and 47 located on opposite sides of the nut plate and dimensioned to be located at opposite sides of the tab portion 28.

In use of the described fastener assembly, the fastener 10 is placed onto an edge portion of the panel 45 (FIG. 3) by forcing the panel edge into space 20 and continuing movement until the panel edge abuts against the end wall 27. Adjustment of the fastener along the panel edge may also be necessary to bring the panel opening 48 into alignment with the nut opening 38. The screw or bolt 40 may now be inserted through an appropriate opening 51 of attachable member 50 and tightened to affix the member 50 to the panel.

As can be seen best in FIGS. 3 and 4, where there is a variation in hole 48 spacing from the panel edge from that expected (e.g., original design specification) the nut plate can be slidingly adjusted to fit over a relatively wide range of such variations. In this way, a single fastener assembly can accommodate a range of mounting hole locations which would have required several different prior known fasteners to cover the same range.

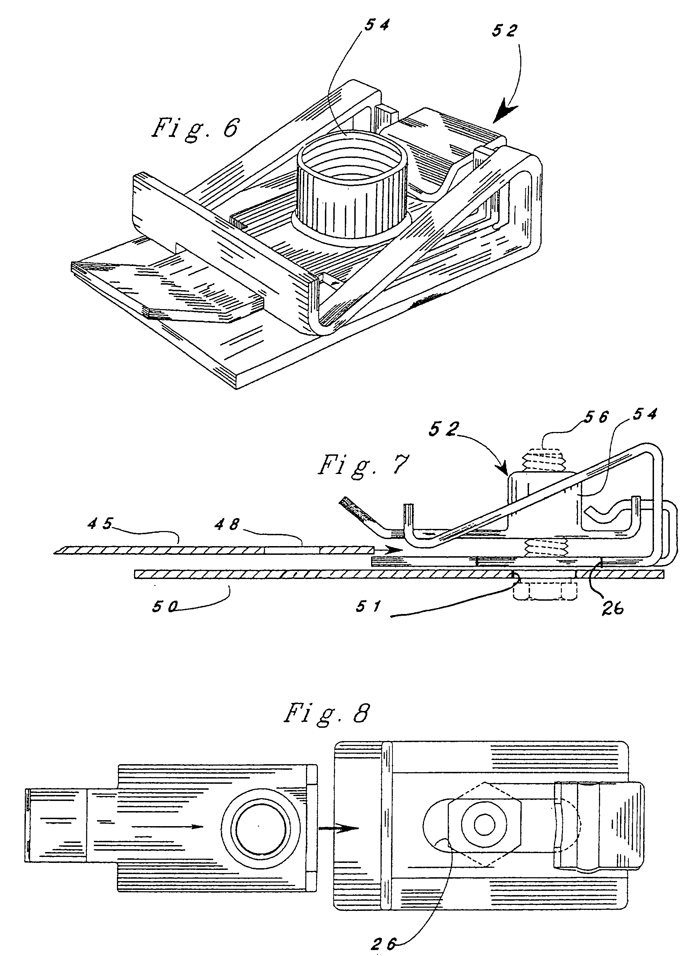

With reference now to FIGS. 6 - 8, there is shown an alternative embodiment fastener assembly 52 which differs from the first described embodiment primarily -in replacing the single-thread opening 38 in nut plate 14 with a multiple-thread tube or sleeve 54. More particularly, the tube 54 is made by a so-called deep drawing technique and simultaneously threaded with a plurality of threads enabling a higher strength use of a bolt 56, for example.

Although the invention has been described in connection with preferred embodiments, it is to be understood that those skilled in the appertaining arts may contemplate changes that come within the scope of the described invention as defined by the appended claims.

## Claims

1. A fastener assembly for mounting on the edge of a panel to receive a threaded member, the assembly comprising a generally U-shaped cage (12) and a nut plate (14), the U-shaped cage having first and second arms (18 and 16) jointed by an integral end wall (27), the arms (16 and 18) being separated from one another at their free ends for receiving a panel therebetween, the first arm (18) including a first opening and the second arm (16) including a second opening (26) which lies generally opposite the first opening, the nut plate being located between the arms and having a threaded opening (38) therein, **characterised in that** the first opening extends from the end wall (27) to a forward edge portion (44) of the arm (18), the nut plate being movable relative to the cage, and having a first portion (36) forwardly of the threaded opening slidingly confined within an opening (42) in the forward edge portion (44) and tab means (28) integral with the cage (12) engaging the nut plate to limit sliding movement of the nut plate with respect to the cage (12) in a first direction and preventing inadvertent release of the nut plate from the cage.

2. A fastener assembly as in claim 1, in which the cage (12) and tab means (28) are integrally constructed from a single metal sheet.

3. A fastener assembly as in claim 1, in which the nut plate opening (38) includes a single thread.

4. A fastener assembly as in claim 1, in which the nut plate threaded opening includes a deep-drawn tube (54) with a plurality of internal threads for receiving a threaded bolt therein.

5. A fastener assembly as in claim 1, in which the tab means (28) is formed from an edge wall adjacent the other cage opening and bent to extend within the cage between the first and second cage arms.

6. A fastener assembly as in claim 5, in which the nut plate includes spaced apart upstanding guide members (46) located one at each side of the tab means (28) for maintaining a preferred aligned movement between the nut plate (14) and the cage (12).

7. A fastener assembly according to any of the preceding claims in which the U-shaped cage is formed from a single piece of springlike resilient metal, the first arm including a forward edge having an opening with two sidewall edges;
the nut plate being separately formed from a further piece of metal with an opening therein including at least one screw thread, said plate including a pair of laterally spaced apart members extending away from the plate in the same direction at one end and an opposite end of said plate formed into a tongue that is canted from said plate in that same direction as said pair of members; and
the tab means extending from the cage end wall away from one of the cage arms toward the other arm and between said two arms;
the nut plate pair of members being slidingly positioned on opposite sides of the tab means and bolt means received within the nut plate threaded opening for clamping the panel between the nut plate and the cage second arm.

8. A fastener assembly as in claim 7, in which the nut plate adjacent the opening therein is deep drawn to form a sleeve, the internal wall of which sleeve is threaded.

## Patentansprüche

1. Befestigervorrichtung zum Anbringen an der Kante einer Tafel zum Aufnehmen eines Gewindeelementes, wobei die Anordnung einen im allgemeinen U-förmigen Käfig (12) und eine Mutterplatte (14) umfaßt, wobei der U-förmige Käfig von einer einstückig ausgebildeten Endwand (27) verbundene erste und zweite Arme (18 und 16) aufweist, wobei die Arme (16 und 18) an ihren freien Enden zum Aufnehmen einer Tafel dazwischen voneinander getrennt sind, der erste Arm (18) eine erste Öffnung enthält und der zweite Arm (16) eine zweite Öffnung (26) enthält, die im allgemeinen gegenüber der ersten Öffnung liegt, wobei die Mutterplatte zwischen den Armen angeordnet ist und eine Gewindeöffnung (38) darin aufweist, **dadurch gekennzeichnet, daß** sich die erste Öffnung von der Endwand (27) zu einem vorderen Kantenabschnitt (44) des Arms (18) erstreckt, wobei die Mutterplatte relativ zu dem Käfig bewegbar ist und vor der Gewindeöffnung einen ersten Abschnitt (36), der gleitend innerhalb einer Öffnung (42) in dem vorderen Kantenabschnitt (44) begrenzt ist, und ein einstückig mit dem Käfig (12) ausgebildetes lappenartiges Mittel (28) aufweist, das in die Mutterplatte eingreift, um die Gleitbewegung der Mutterplatte in bezug auf den Käfig (12) in einer ersten Richtung zu beschränken und damit ein versehentliches Lösen der Mutterplatte von dem Käfig zu verhindern.

2. Befestigervorrichtung nach Anspruch 1, wobei der Käfig (12) und das lappenartige Mittel (28) einstückig aus einem einzigen Blech konstruiert sind.

3. Befestigervorrichtung nach Anspruch 1, wobei der Öffnung (38) der Mutterplatte ein eingängiges Gewinde umfaßt.

4. Befestigervorrichtung nach Anspruch 1, wobei die Gewindeöffnung der Mutterplatte ein tiefgezogenes Rohr (54) mit einer Vielzahl von Innengewindegängen zum Aufnehmen einer Gewindeschraube darin umfaßt.

5. Befestigervorrichtung nach Anspruch 1, wobei das lappenartige Mittel (28) aus einer Kantenwand angrenzend an die andere Käfigöffnung ausgebildet ist und so gebogen ist, daß es sich innerhalb des Käfigs zwischen den ersten und zweiten Käfigarmen erstreckt.

6. Befestigervorrichtung nach Anspruch 5, wobei die Mutterplatte voneinander beabstandete, aufrechtstehende Führungselemente (46) umfaßt, von denen je eines auf jeder Seite des lappenartigen Mittels (28) angeordnet ist, um eine bevorzugte ausgerichtete Bewegung zwischen der Mutterplatte (14) und dem Käfig (12) aufrechtzuerhalten.

7. Befestigervorrichtung nach einem der vorhergehenden Ansprüche, wobei der U-förmige Käfig aus einem einzigen federartigen, elastischen Metallstück ausgebildet ist, wobei der erste Arm eine Vorderkante mit einer Öffnung mit zwei Seitenwandkanten umfaßt;
die Mutterplatte gesondert aus einem weiteren Metallstück mit einer Öffnung darin ausgebildet ist, die mindestens ein Schraubengewinde enthält, wobei die Platte ein Paar seitlich voneinander beabstandete Elemente umfaßt, die sich an einem Ende in der gleichen Richtung von der Platte weg erstrecken, und wobei ein gegenüberliegendes Ende der Platte zu einer Zunge geformt ist, die von der Platte aus in der gleichen Richtung wie das Elementepaar abgefast ist; und
wobei sich das lappenartige Mittel von der Endwand des Käfigs weg von einem der Käfigarme in Richtung zu dem anderen Arm und zwischen den zwei Armen erstreckt;
das Elementepaar der Mutterplatte gleitend auf einander gegenüberliegenden Seiten des lappenartigen Mittels positioniert ist und ein Schraubenmittel in der Gewindeöffnung der Mutterplatte aufgenommen ist, um die Tafel zwischen der Mutterplatte und dem zweiten Arm des Käfigs zu spannen.

8. Befestigervorrichtung nach Anspruch 7, wobei die Mutterplatte angrenzend an die Öffnung darin tiefgezogen ist, um eine Hülse zu bilden, wobei die Innenwand dieser Hülse ein Gewinde besitzt.

## Revendications

1. Ensemble de fixation destiné à être monté sur le bord d'un panneau en vue de recevoir un élément fileté, l'ensemble comprenant une cage en forme générale de U (12) et une plaque d'écrou (14), la cage en forme de U ayant des premier et deuxième bras (18 et 16) joints par une paroi d'extrémité incorporée (27), les bras (16 et 18) étant séparés l'un de l'autre au niveau de leurs extrémités libres pour recevoir un panneau entre eux, le premier bras (18) comportant une premier ouverture et le deuxième bras (16) comportant une deuxième ouverture (26) qui repose généralement en face de la première ouverture, la plaque d'écrou étant située entre les bras et comportant une ouverture filetée (38), **caractérisé en ce que** la première ouverture s'étend depuis la paroi d'extrémité (27) jusqu'à une partie de bord avant (44) du bras (18), la plaque d'écrou étant déplaçable par rapport à la cage, et ayant une première partie (36) en avant de l'ouverture filetée confinée de manière coulissante à l'intérieur d'une ouverture (42) dans la partie de bord avant (44) et un moyen de patte (28) incorporé à la cage (12) engageant la plaque d'écrou pour limiter le mouvement coulissant de la plaque d'écrou par rapport à la cage (12) dans un premier sens et empêchant une libération accidentelle de la plaque d'écrou d'avec la cage.

2. Ensemble de fixation selon la revendication 1, dans lequel la cage (12) et le moyen de patte (28) sont construits de manière incorporée à partir d'une même feuille métallique.

3. Ensemble de fixation selon la revendication 1, dans lequel l'ouverture de plaque d'écrou (38) comporte un filet unique.

4. Ensemble de fixation selon la revendication 1, dans lequel l'ouverture filetée de plaque d'écrou comporte un tube embouti (54) à pluralité de filets internes pour y recevoir un boulon fileté.

5. Ensemble de fixation selon la revendication 1, dans lequel le moyen de patte (28) est formé à partir d'une paroi de bord adjacente à l'autre ouverture de cage et courbée pour s'étendre à l'intérieur de la cage entre les premier et deuxième bras de cage.

6. Ensemble de fixation selon la revendication 5, dans lequel la plaque d'écrou comporte des éléments de guidage droits espacés (46) situés un de chaque côté du moyen de patte (28) pour maintenir un mouvement aligné préféré entre la plaque d'écrou (14) et la cage (12).

7. Ensemble de fixation selon l'une quelconque des revendications précédentes dans lequel la cage en forme de U est formée à partir d'un seul morceau de métal élastique comme un ressort, le premier bras comportant un bord avant ayant une ouverture à deux bords latéraux ;
la plaque d'écrou étant formée séparément à partir d'un autre morceau de métal comportant une ouverture comportant au moins un filet de vis, ladite plaque comportant une paire d'éléments espacés latéralement s'écartant de la plaque dans le même sens au niveau d'une extrémité et une extrémité opposée de ladite plaque étant formée en une languette qui est chanfreinée à partir de ladite plaque dans le même sens que ladite paire d'éléments; et
le moyen de patte s'étendant depuis la paroi d'extrémité de cage à l'écart d'un des bras de cage vers l'autre bras et entre lesdits deux bras ;
la paire d'éléments de plaque d'écrou étant positionnée de manière coulissante sur des côtés opposés du moyen de patte et un moyen de boulon étant reçu à l'intérieur de l'ouverture filetée de plaque d'écrou pour verrouiller le panneau entre la plaque d'écrou et le deuxième bras de cage.

8. Ensemble de fixation selon la revendication 7, dans lequel la plaque d'écrou adjacente à l'ouverture dans celui-ci est emboutie en vue de former un manchon, la paroi interne dudit manchon étant filetée.
